# EUROPEAN PATENT APPLICATION

(11) **EP 2 905 577 A1**
(43) Date of publication of application: **12.08.2015**
(21) Application number: 14177698.9
(22) Date of filing: 18.07.2014
(51) Int. Cl.: G01B 11/16, G01L 1/24

(54) **Strain inspection apparatus**

(30) Priority: 07.02.2014 JP 2014022837
(71) Applicant: Luceo Co., Ltd., Itabashi-ku Tokyo 173-0024 (JP)
(72) Inventor: Sakashita, Ryuichi, Tokyo 173-0024 (JP); Honda, Umehiko, Tokyo 173-0024 (JP); Takada, Tomomi, Tokyo 173-0024 (JP); Yo, Haruo, Tokyo 173-0024 (JP)
(74) Representative: Kuhnen & Wacker

(57) **Abstract**

A strain inspection apparatus (100) is provided that includes a drive mechanism (164-167) for rotating a polarizing plate (141) corresponding to an analyzer and that can perform a test without the polarizing plate being manually rotated by an operator. A strain inspection apparatus (100) includes a camera (140), a second polarizing plate (141), a quarter wavelength plate (142), a first polarizing plate (143), a diffusion plate (144), a light source (145) and a drive mechanism (164-167) for stepwise rotating the second polarizing plate (141) at an arbitrary angle. The camera (140), the second polarizing plate (141), the quarter wavelength plate (142), the first polarizing plate (143), the diffusion plate (144) and the light source (145) are aligned on the same axis (test axis), and the drive mechanism automatically rotates the second polarizing plate (141) corresponding to an analyzer so as to measure a retardation and an optical axis direction.

## Description

### TECHNICAL FIELD

The present invention relates to an optical measuring apparatus and, more particularly, to a strain inspection apparatus or system which detects a strain present in the object to be examined by measuring the retardation and the optical axis.

### BACKGROUND OF TECHNICAL FIELD

In general, in glass products, resin products such as acrylic resin and the like, strain may occur due to, for example, unevenness of heat distribution at the time of processing, and this strain can be a factor that causes strength reduction, destruction of nature or the like. Hence, with consideration given to quality control, safety and the like, at a time of product manufacturing, product shipment or the like, it is necessary to perform quality tests and product control by setting a certain criterion value for a residual strain within the product, performing tests and removing products whose residual strain exceeds the criterion value.

As a more specific example, there is a test method using a crossed Nicols method or a Senarmont method.

The Senarmont method is used for performing a quantitative measurement on strain. In a general measuring method using the Senarmont method, light from a light emitting member is first converted by a polarizing plate (polarizer) into linearly polarized light, and the polarized light is irradiated on a sample. The light applied to the sample produces a retardation in a portion of the sample where strain is present, and is converted into elliptically polarized light. Then, the elliptically polarized light passes through a quarter wavelength plate where an optical axis is displaced as necessary, and is thereby converted into linearly polarized light having a polarizing axis whose direction is different from the original direction. Then, with respect to this linearly polarized light, the polarizing plate (analyzer) is rotated, and the amount of variation in the angle of the polarizing axis is measured from the original linearly polarized light. Since the amount of variation in the polarizing axis is proportional to the retardation caused by the strain, it is possible to determine the retardation with a calculation formula.

As the apparatus using the Senarmont method, an inspection apparatus as disclosed in the non-patent document 1 is known in the art. However, since in the conventional apparatus as disclosed in the non-patent document 1, a polarizing plate that corresponds to an analyzer needs to be rotated manually, a measuring process becomes inevitably complicated. Hence, there is a need for realizing a strain inspection apparatus wherein measuring process can be achieved without the polarizing plate corresponding to the analyzer being manually operated by an operator.

[Non-patent document 1] Semi-auto Senarmont LSM-7002 <URL: http://www.luceo.co.jp/news/lsm-7002.html>

### SUMMARY OF INVENTION

The present invention has been made in view of the foregoing conditions and demands. An object of the present invention is to provide a strain inspection apparatus that includes a drive mechanism for rotating a polarizing plate corresponding to an analyzer and that can perform the measuring process without the polarizing plate being manually rotated by an operator.

In order to solve the foregoing problem, according to the present invention, there is provided a strain inspection apparatus for examining strain present within an object which transmits light, the strain inspection apparatus comprising: a light source; a diffusion plate that is provided close to or in intimate contact with the light source; a first polarizing plate that is provided close to or in intimate contact with a surface of the diffusion plate on a side opposite to a side of the light source; a quarter wavelength plate that is provided close to or in intimate contact with a surface of the first polarizing plate on a side opposite to a side of the diffusion plate such that a direction of an axis is displaced by 45 degrees with respect to a polarizing axis of the first polarizing plate; a second polarizing plate that is provided opposite and a predetermined distance apart from the quarter wavelength plate so as to form a test region between the second polarizing plate and the quarter wavelength plate; an image sensing device that is provided close to a side of the second polarizing plate opposite to a side of the quarter wavelength plate; and a drive mechanism for stepwise or continuously rotating the second polarizing plate at an arbitrary desired angle.

The drive mechanism may be formed with a stepping motor.

The light source may be formed with a bottomed box-shaped member having an open upper surface, a light emitting member provided in a center portion of an inside bottom surface of the box-shaped member and a translucent member provided above the light emitting member.

The translucent member may be formed with a foamed plastic formed in a shape of a circular plate having a thickness of 7 mm.

The light emitting member may be formed with one light emitting diode (LED) or an aggregation of a plurality of light emitting diodes (LEDs).

The light emitting diode may emit visible light of a single color falling within a range from blue color to red color.

The light emitting diode may be a surface-mount type.

According to the present invention, there is also provided a strain inspection system that is formed with the strain inspection apparatus and an analysis device capable of communicating with the strain inspection apparatus through a communication means, the analysis device including: an input section that receives an instruction input by an operator; an arithmetic section that computes, based on the input instruction, measured data transmitted from the strain inspection apparatus; an image generation section that generates an image based on a value computed by the arithmetic section; and a display section that displays the image generated by the image generation section.

The arithmetic section may include a gradation value calculation part that calculates, based on the measured data, a gradation value indicating a magnitude of strain.

The image generation section may generate a three-dimensional image based on values calculated by the gradation value calculation part.

The arithmetic section may include an axis direction value calculation part that calculates, based on the measured data, an axis direction value indicating an axis direction of strain.

The arithmetic section may include a measured data extraction part that extracts an arbitrary range in the measured data.

The arithmetic section may include a linear calculation part that calculates a magnitude of strain or an axis direction on an arbitrary straight line in the measured data or the data extracted by the measured data extraction part.

According to the present invention, it is possible to provide a strain inspection apparatus that includes a drive mechanism for rotating a polarizing plate corresponding to an analyzer and that can perform the measuring process without the polarizing plate being manually rotated by an operator.

### BRIEF DESCRIPTION OF DRAWINGS

Fig. 1 is a diagram showing an overall configuration of a strain inspection apparatus according to an embodiment of the present invention;
Fig. 2 is a diagram showing an internal configuration of the strain inspection apparatus;
Fig. 3 is an exploded view showing a relationship among a camera, a second polarizing plate, a quarter wavelength plate, a first polarizing plate, a diffusion plate and a light source;
Fig. 4 is a cross-sectional view showing the configuration of the second polarizing plate and its peripherals;
Fig. 5 is a perspective view showing the configuration of the light source;
Fig. 6 is a cross-sectional view showing the configuration of the light source;
Fig. 7 is a diagram showing an overall configuration of a strain inspection system;
Fig. 8 is a block diagram showing the configuration of an analysis device;
Fig. 9 is a block diagram showing calculation parts and the like in the arithmetic section;
Fig. 10 is a diagram showing an example of the screen display of the analysis device;
Fig. 11 is a diagram showing an example of the screen display of the analysis device;
Fig. 12 is a diagram showing an example of the screen display of the analysis device;
Fig. 13 is a diagram showing an example of the screen display of the analysis device;
Fig. 14 is a diagram showing an example of the screen display of the analysis device;
Fig. 15 is a diagram showing an example of the screen display of the analysis device; and
Fig. 16 is a diagram showing an example of the screen display of the analysis device.

### DESCRIPTION OF EMBODIMENTS

An embodiment of a strain inspection apparatus according to the present invention will be described in detail below with reference to the accompanying drawings.

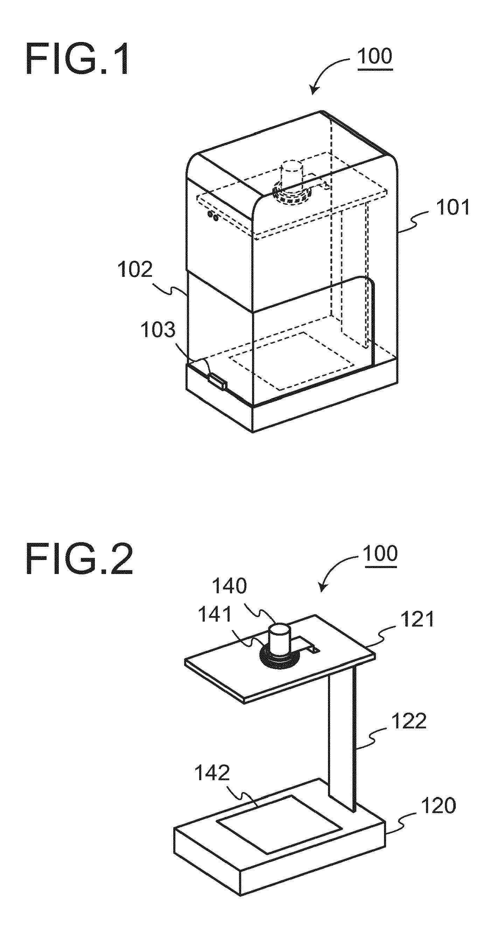

Fig. 1 is a diagram showing an overall configuration of the strain inspection apparatus 100 according to the present invention. As shown in the figure, the strain inspection apparatus 100 is formed with a case 101 that accommodates therein individual components of the strain inspection apparatus 100, a slide cover 102 that is vertically opened or closed when a sample to be examined is placed and a handle 103 that is used when the slide cover 102 is vertically opened or closed.

The material of the case 101 and the slide cover 102 is not particularly limited, and may be arbitrarily determined from various types of materials such as polycarbonate material and FRP material. However, in terms of interrupting outside light, which undesirably affects the measuring process, it is preferable to use a material that does not transmit light. A mechanism for vertically opening and closing the slide cover 102 is not particularly limited, and a mechanism for vertically opening and closing the slide cover 102 with a belt, a mechanism using a wire or the like may well be adopted.

The slide cover 102 is associated with a sensor (not shown), such as a limit switch or a photoelectric element, which is adapted to detect its closed state. Thus, it is possible to make a setting such that only when the slide cover 102 is in the closed state, the strain inspection apparatus 100 can operate.

Now, with reference to Fig. 2, the configuration of the strain inspection apparatus 100 of the present invention will be explained.

Fig. 2 is a diagram showing an internal configuration of the strain inspection apparatus 100. As shown in the figure, the strain inspection apparatus 100 is formed with a rectangular plate-shaped member 121, a second polarizing plate 141, a camera 140 that is provided on the upper portion of the second polarizing plate 141, a support column 122 that supports the plate-shaped member 121, a main body 120 that also serves as the foundation of the support column 122, a quarter wavelength plate 142 that is provided within the main body 120, a first polarizing plate 143 (not shown) that is provided within the main body 120, a diffusion plate 144 (not shown) that is provided within the main body 120 and a light source 145 (not shown) that is provided within the main body 120.

The camera 140 serving as an image sensing device is a camera that receives light which is emitted from the light source 145 and which passes through the diffusion plate 144, the first polarizing plate 143, the quarter wavelength plate 142, the sample and the second polarizing plate 141. As a specific example of the camera 140, there is a CCD camera. The camera 140 is fixed with a fixture as shown in Fig. 2 to the upper portion of the second polarizing plate 141.

The diffusion plate 144 operates as a diffuser to eliminate or reduce the unevenness of the light emitted from the light source 145.

A test region in the strain inspection apparatus 100 is formed between the quarter wavelength plate 142 and the second polarizing plate 141, and in general, the measuring is performed with the sample to be measured placed on the upper surface of the quarter wavelength plate 142. As described above, the strain inspection apparatus 100 is configured such that when the sample is placed on or removed from the upper surface of the quarter wavelength plate 142, the slide cover 102 can be opened by being made to slide.

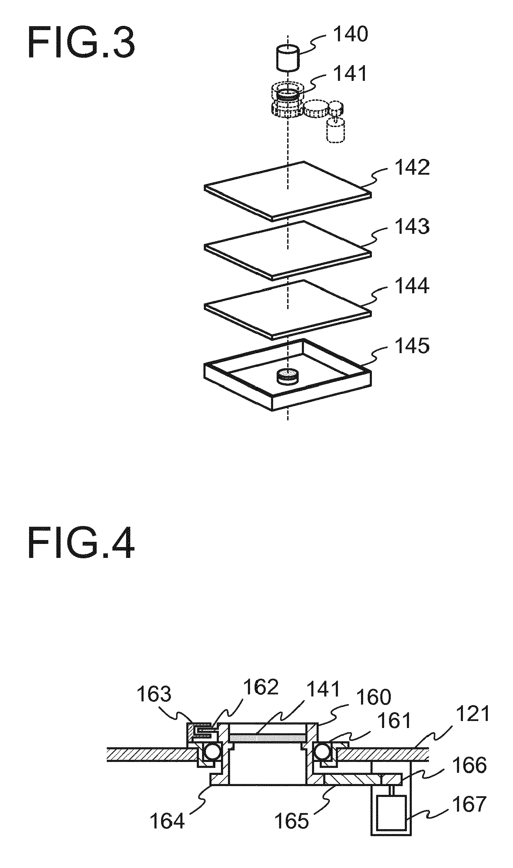

Here, with reference to Fig. 3, the optical relationship among the camera 140, the second polarizing plate 141, the quarter wavelength plate 142, the first polarizing plate 143, the diffusion plate 144 and the light source 145 included in the strain inspection apparatus 100 will be described.

Fig. 3 is an exploded view showing the relationship among the camera 140, the second polarizing plate 141, the quarter wavelength plate 142, the first polar-izing plate 143, the diffusion plate 144 and the light source 145 included in the strain inspection apparatus 100. As shown in the figure, the camera 140, the second polarizing plate 141, the quarter wavelength plate 142, the first polarizing plate 143, the diffusion plate 144 and the light source 145 are aligned on the same axis (test axis). The distance between the second polarizing plate 141 and the quarter wavelength plate 142 is not particularly limited, and can be arbitrarily determined depending on the size of the sample to be tested or the like.

The first polarizing plate 143 and the quarter wavelength plate 142 are arranged in such a manner that their optical axes are relatively displaced by 45 degrees, that is, the directions of the polarizing axes are relatively displaced by 45 degrees. Thus, the light emitted from the light source 145 and passing through the first polarizing plate 143 and the quarter wavelength plate 142 can be converted into circularly polarized light.

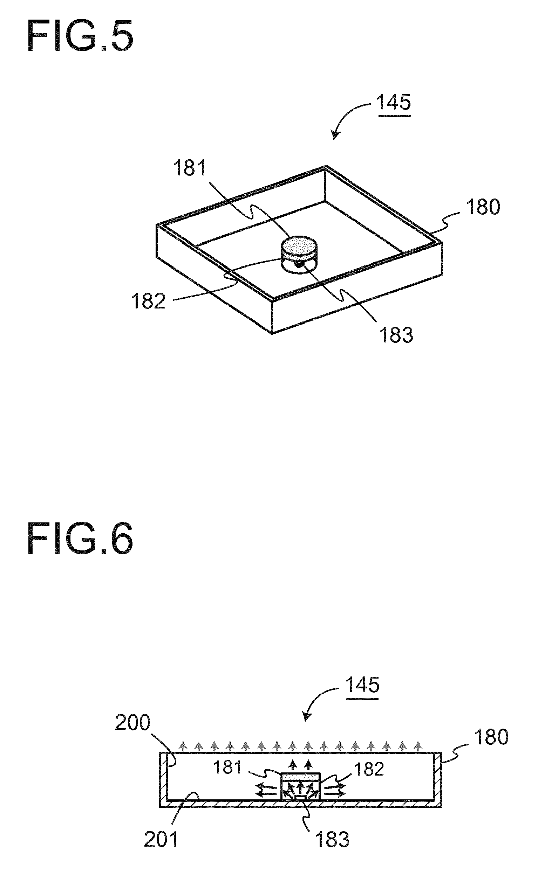

The configuration of the light source 145 will be described later with reference to Fig. 5.

The configuration of the second polarizing plate 141 and its peripherals will be described with reference to Fig. 4.

Fig. 4 is a cross-sectional view showing the configuration of the second polarizing plate 141 and portions therearound. As shown in the figure, the second polarizing plate 141 is fitted into a cylindrical rotary member 160 that can be rotated within a circular hole provided in the plate-shaped member 121, and the rotary member 160 is fixed to bearings 161 fixed so as to be fitted into a hole provided in the plate-shaped member 121 and is rotated.

In the lower portion of the rotary member 160, a gearwheel 164 is formed, and the gearwheel 164 is engaged, with an intermediate gearwheel 165 being intervened, with a drive gearwheel 166 provided at the drive shaft of a motor 167 serving as a drive mechanism. The type of the gearwheel is not particularly limited and, for example, a spur gear or a helical gear may well be adopted. The intermediate gearwheel 165 is not necessarily needed, and as long as an inertial load and a reduction ratio satisfy the required specifications, the intermediate gearwheel 165 may be omitted, for example, when the size of the strain inspection apparatus 100 is reduced.

Although as the motor 167, various types of motors can be used, in order to realize accurate and quick rotation control, it is more preferable to use a stepping motor.

Although in the strain inspection apparatus 100, the amount of rotation of the second polarizing plate 141 is equal to the amount of rotation of the rotary member 160, in order to calculate the amount of rotation of the rotary member 160, it is necessary to determine the rotation reference position (neutral position) of the rotary member 160. Hence, the strain inspection apparatus 100 includes, in the vicinity of the rotary member 160, an optical sensor 163 for detecting whether or not the rotary member 160 is present at the rotation reference position, and a protrusion portion 162 that can pass between the light emission portion and the light reception portion of the optical sensor in the rotary member 160, is provided.

As the optical sensor 163, various types of sensors, such as a photointerrupter type sensor using a photodiode, can be used, and is not particularly limited thereto.

The configuration of the light source 145 will then be described with reference to Fig. 5.

Fig. 5 is a perspective view showing the configuration of the light source 145. As shown in the figure, the light source 145 is formed with a bottomed box-shaped member 180 formed with four side surface plates and a bottom surface plate, a light emitting member 183 that is provided in the center of the bottom surface plate, a translucent member 181 that is provided above the light emitting member 183 and a transparent member 182 for fixing or supporting the translucent member 181 above the light emitting member 183.

The material of the box-shaped member 180 is not particularly limited, and may be arbitrarily determined from various types of materials such as aluminum and polycarbonate.

The translucent member 181 is a member that limits the amount of light around the center where the light emitting member 183 is provided so as to balance it with the amount of light in areas other than the vicinity of the center, and is formed with a translucent material. The specific material of the translucent member 181 is not particularly limited, and may be arbitrarily determined from various types of materials such as a foamed plastic. Although in the present embodiment, a foamed plastic where the thickness of the translucent member 181 in the direction of the measuring axis is 7 mm is used, the thickness of the translucent member 181 in the direction of the measuring axis is not limited to this configuration, and may be arbitrarily determined according to the amount of light of the light emitting member 183 or the like.

The transparent member 182 is used for supporting the translucent member 181 above the light emitting member 183. Although in the present embodiment, as shown in the figure, the transparent member 182 is cylindrical with its cross section circular, the shape of the transparent member 182 is not limited to this shape. For example, its cross section may be rectangular. The material of the transparent member 182 is not particularly limited, and may be arbitrarily selected from various types of materials such as polycarbonate.

The light emitting member 183 is formed with one light emitting diode (LED) or an aggregation of a plurality of light emitting diodes (LEDs). The color of light emitted by the light emitting diode is not particularly limited, and although in general, visible light of a single color falling within a range from blue color to red color is used, infrared light may well be used.

Although the type of light emitting diode (LED) of the light emitting member 183 may be either a bullet type or a surface-mount type, with consideration given to the directivity of the emitted light and the like, the surface-mount type is more preferably used.

The operation or action of the light source 145 will be described with reference to Fig. 6.

Fig. 6 is a cross-sectional view showing the configuration of the light source 145. As shown in the figure, when light is emitted from the light emitting member 183, part of the light emitted upwardly from the light emitting member 183 passes through the translucent member 181, and light emitted to the areas other than the area above the light emitting member 183 and light reflected by the translucent member 181 pass through the transparent member 182. The light that has passed through the transparent member 182 is reflected by the four side surfaces 200 and also a bottom surface 201 within the box-shaped member 180, and is finally emitted through the upper surface of the box-shaped member 180 to the diffusion plate 144 (gray arrows).

The strain inspection apparatus 100 described above and according to the present invention functions or operates as follows. Specifically, the light emitted from the light source 145 passes through the diffusion plate 144, thereafter passes through the first polarizing plate 143 and the quarter wavelength plate 142 and is converted into circularly polarized light. When the circularly polarized light passes through the sample, in a portion where strain is present, a retardation is produced between the slow axis and the fast axis of double refraction, and the light is converted into elliptically polarized light. When the elliptically polarized light passes through the second polarizing plate 141, only light of a component parallel to a polarization transmission axis passes through it as linearly polarized light. Here, the intensity of the light that has passed through the second polarizing plate 141 is subjected to a specific change depending on the retardation and the direction of the slow axis as the rotation angle of the second polarizing plate 141 is changed. Hence, the strain inspection apparatus 100 shoots with the camera 140 at different rotation angles of at least four places including the initial position of the second polarizing plate 141, and compares the case where the sample is present and the case where the sample is not present, with the result that the polarized state, that is, an ellipticity and the inclination of the ellipse are computed from the intensity of the light at each of the angles.

The camera 140 is an aggregation of a large number of image sensing elements (pixels), and thereby detects the light passing through the second polarizing plate 141. As will be described later, information obtained by each of the image sensing elements is fed, through a communication means such as a cable 222, to an analysis device and the like, and the necessary processing is performed thereat accordingly.

Here, the different rotation angels of the four places described above are preferably 0 degree, 45 degrees, 90 degrees and 135 degrees when the rotation angle of the initial position is assumed to be 0 degree.

As described above, the strain inspection apparatus 100 of the present invention makes it possible to quantitatively measure the magnitude of retardation within an object that has strain and double refraction and that transmits light and the direction of the slow axis.

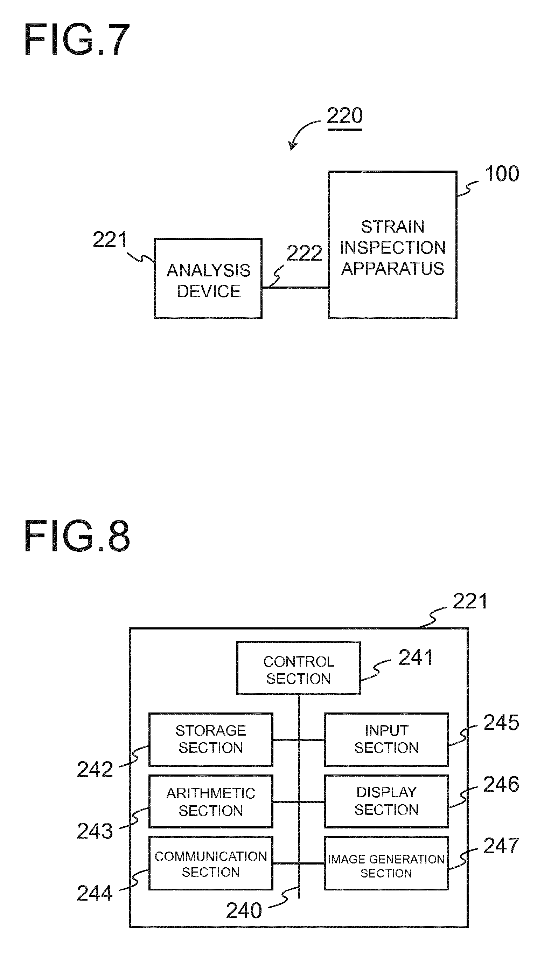

A strain inspection system formed with the strain inspection apparatus of the present invention and the analysis device that is capable of communicating with the strain inspection apparatus through the communication means, will be described with reference to Figs. 7 to 9.

Fig. 7 is a diagram showing an overall configuration of a strain inspection system 220 according to the present invention. As shown in the figure, the strain inspection system 220 includes the strain inspection apparatus 100 and the analysis device 221. The strain inspection system 220 and the analysis device 221 can communicate with each other through the cable 222 serving as the communication means.

Here, the specific type and configuration of the cable 222 are not particularly limited, and for example, various types of communication cables such as a LAN cable and a shield cable can be used. A means for connecting the strain inspection apparatus 100 and the analysis device 221 does not need to be a physical cable, and the strain inspection apparatus 100 and the analysis device 221 may well be connected by wireless communication such as wireless LAN or infrared communication.

The configuration of the analysis device 221 will be described hereunder with reference to Fig. 8.

Fig. 8 is a block diagram showing the configuration of the analysis device 221. As shown in the figure, the analysis device 221 includes, through a bus 240, a control section 241, a storage section 242, an arithmetic section 243, a communication section 244, an input section 245, a display section 246 and an image generation section 247. The arithmetic section 243 and the image generation section 247 may be configured by software or by hardware.

The control section 241 is a CPU (central processing unit) that functions as the center of the analysis device 221, and performs programs stored in the storage section 242 and the like to control the constituent elements of the analysis device 221.

The storage section 242 is usually formed with a ROM (read only memory) and a RAM (random access memory), stores measured data transmitted from the strain inspection apparatus 100, programs performed by the control section 241 and the like and forms various types of operation storage regions. A part or the whole of the storage section 242 does not need to be physically configured within the analysis device 221, and may be a so-called external storage device externally connected to the analysis device 221.

The arithmetic section 243 has the function of receiving an instruction from the control section 241 to compute the measured data transmitted from the strain inspection apparatus 100. The arithmetic section 243 does not necessarily need to be configured singly, and the control section 241 may also function as a part or the whole of the arithmetic section 243.

The communication section 244 is a communication means that receives and transmits, under control of the control section 241, the measured data, various types of instructions and the like from and to the strain inspection apparatus 100. Here, as a specific example of the instruction received and transmitted by the communication section 244, there is a control signal for controlling the rotation angle of the second polarizing plate 141 transmitted from the analysis device 221 to the camera 140 included in the strain inspection apparatus 100.

The input section 245 has the function of receiving an input operation performed by the operator of the analysis device 221, and is formed with, for example, a keyboard, a camera, a mouse, a microphone for receiving sound input, a touch panel provided on the display surface of the display section 246 or the like.

The display section 246 is a display that is formed with, for example, flat display elements such as liquid crystal display elements or organic EL.

The image generation section 247 generates and outputs an image, under an instruction of the control section 241, based on the measured data and various types of values computed by the arithmetic section 243.

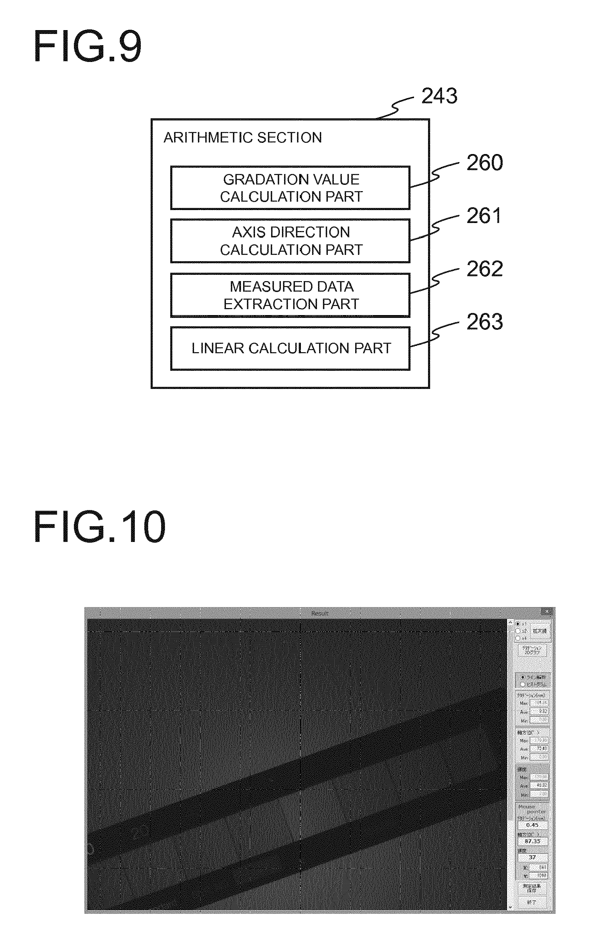

Various calculation parts and the like included in the arithmetic section 243 will then be described with reference to Fig. 9.

Fig. 9 is a block diagram showing the calculation processing parts included in the arithmetic section 243. As shown in the figure, the arithmetic section 243 includes a gradation value calculation part 260, an axis direction calculation part 261, a measured data extraction part 262 and a linear calculation part 263.

The gradation value calculation part 260 calculates, for each pixel, a gradation value indicating the magnitude of strain based on the measured data transmitted from the strain inspection apparatus 100 or the measured data extracted by the measured data extraction part 262, which will be described later. The gradation value calculated by the gradation value calculation part 260 is used when the image generation section 247 finally generates an image indicating the magnitude of strain with the change of color (as an example, change from blue color to red color as in the present embodiment).

The axis direction calculation part 261 calculates, for each pixel, the direction of the slow axis, based on the measured data transmitted from the strain inspection apparatus 100 or the measured data extracted by the measured data extraction part 262, which will be described later. The axis direction value calculated by the axis direction calculation part 261 is used when the image generation section 247 finally generates an image indicating the direction of the axis.

The measured data extraction part 262 extracts measured data in an arbitrary range from the measured data transmitted from the strain inspection apparatus 100. The extracted range is determined based on an instruction from the input section 245 by the operator of the analysis device 221. Then, the measured data extracted by the measured data extraction part 262 is calculated by the gradation value calculation part 260 and the axis direction calculation part 261.

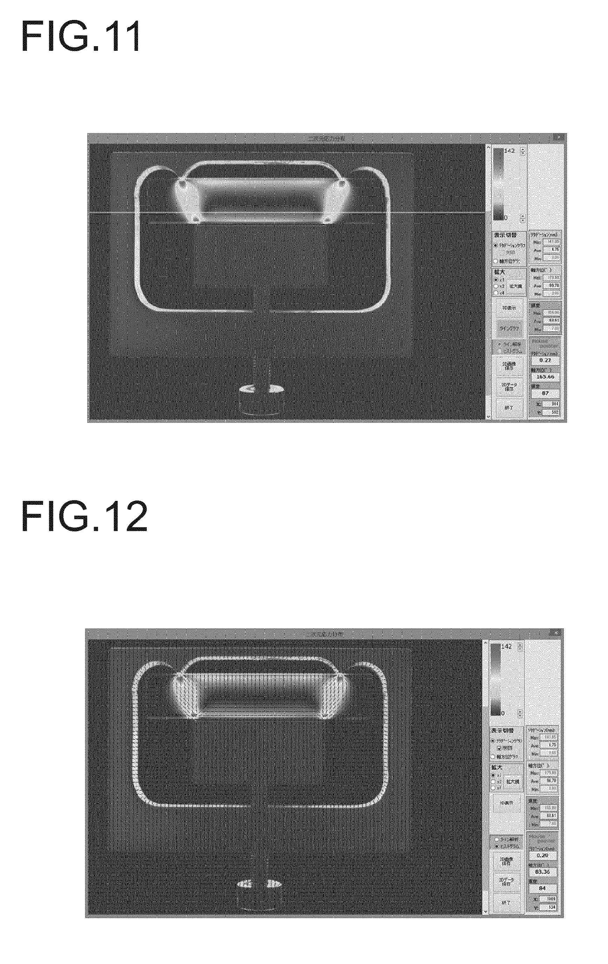

The linear calculation part 263 calculates, for each pixel, the gradation value indicating the magnitude of strain or the direction of the slow axis based on the measured data on an arbitrary straight line (for example, a straight line indicated slightly upwardly in Fig. 11) among the measured data transmitted from the strain inspection apparatus 100 or the measured data extracted by the measured data extraction part 262 described above. The gradation value or the axis direction value calculated by the linear calculation part 263 is used when the image generation section 247 finally generates a graph image indicating the magnitude of strain on the determined straight line or the change of the axis direction.

The form of the image generated by the image generation section 247 of the analysis device 221 will then be described with reference to Figs. 10 to 16.

Fig. 10 is a diagram showing a state where data transmitted from the strain inspection apparatus 100 is displayed without being processed.

Fig. 11 is a diagram showing a state where based on the gradation value obtained by computing, with the gradation value calculation part 260, the data transmitted from the strain inspection apparatus 100, the magnitude of strain is displayed by change of color (as an example, change from blue color to red color). Two numbers displayed in an upper portion of the right side of Fig. 11 are values that indicate the amount of strain, and upward and downward arrows displayed on the right side are clicked, and thus it is possible to arbitrarily change the range of strain displayed by change in color.

Fig. 12 is a diagram showing a state where an image indicating the axis direction is displayed by lines based on the axis direction value obtained by computing, with the axis direction calculation part 261, the data transmitted from the strain inspection apparatus 100. As shown therein, the respective lines shown with a constant space provided therebetween indicate the direction of slow axis at the respective lines.

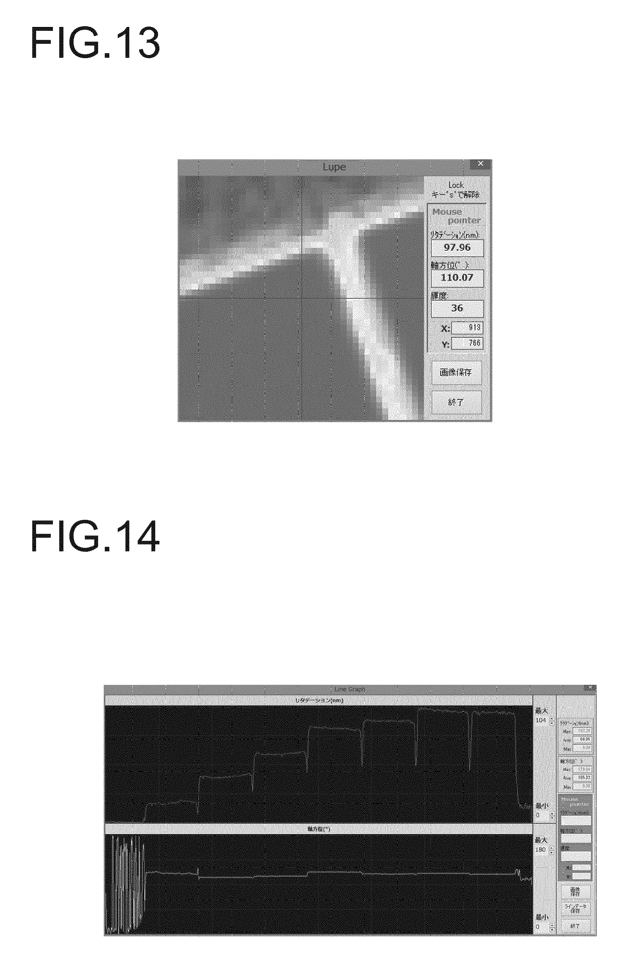

Fig. 13 is a diagram showing a state where the magnitude of strain is displayed by change of color based on the gradation value obtained by extracting, with the measured data extraction part 262, measured data in an arbitrarily selected range from the data transmitted from the strain inspection apparatus 100 and computing the extracted measured data with the gradation value calculation part 260.

Fig. 14 is a diagram showing a state where the magnitude of strain and the change of the axis direction value on a straight line determined based on the gradation value and the axis direction value obtained by computing, with the linear calculation part 263, measured data on an arbitrarily determined straight line among the data transmitted from the strain inspection apparatus 100 are displayed by a graph.

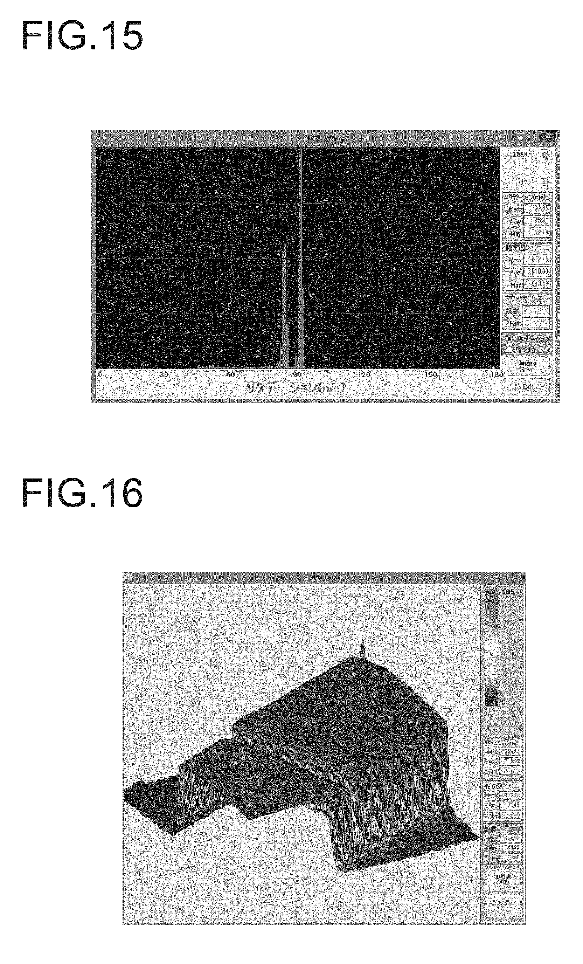

Fig. 15 is a diagram showing a state where the distribution of the magnitude of strain in a range of measured data extracted by the measured data extraction part 262 is displayed by a histogram.

Fig. 16 is a diagram showing a state where the gradation value obtained by computing, with the gradation value calculation part 260, the measured data extracted by the measured data extraction part 262 is displayed three-dimensionally.

As described above, the strain inspection system 220 of the present invention can automatically and quantitatively measure the magnitude of retardation within an object that has strain and double refraction and that transmits light and the direction of the slow axis.

Although the preferred embodiment of the present invention has been shown and explained hereinabove, the present invention is not limited to the embodiment described above, and it is needless to say that various modifications can be made without departing from the spirit of the present invention.

## Claims

1. A strain inspection apparatus (100) for examining strain present within an object which transmits light, said strain inspection apparatus (100) **characterized by** comprising:
a light source (145);
a diffusion plate (144) that is provided close to or in intimate contact with said light source (145);
a first polarizing plate (143) that is provided close to or in intimate contact with a surface of said diffusion plate (144) on a side opposite to a side of said light source (145);
a quarter wavelength plate (142) that is provided close to or in intimate contact with a surface of said first polarizing plate (143) on a side opposite to a side of said diffusion plate (144) such that a direction of an axis is displaced by 45 degrees with respect to a polarizing axis of said first polarizing plate (143);
a second polarizing plate (141) that is provided opposite and a predetermined distance apart from said quarter wavelength plate (142) so as to form a test region between said second polarizing plate (141) and said quarter wavelength plate (142);
an image sensing device (140) that is provided close to a side of said second polarizing plate (141) opposite to a side of said quarter wavelength plate (142); and
a drive mechanism (164,165,167) for stepwise or continuously rotating said second polarizing plate (141) at an arbitrary desired angle.

2. A strain inspection apparatus (100) according to claim 1, wherein said drive mechanism is formed with a stepping motor (167).

3. A strain inspection apparatus according to claim 1 or 2, wherein said light source (145) is formed with a bottomed box-shaped member (180) having an open upper surface, a light emitting member (183) provided in a center portion of an inside bottom surface of said box-shaped member (180) and a translucent member (181) provided above said light emitting member (183).

4. A strain inspection apparatus (100) according to claim 3, wherein said translucent member (181) is formed with a foamed plastic formed in a shape of a circular plate having a thickness of 7 mm.

5. A strain inspection apparatus (100) according to claim 3, wherein said light emitting member (183) is formed with one light emitting diode (LED) or an aggregation of a plurality of light emitting diodes (LEDs).

6. A strain inspection apparatus (100) according to claim 5, wherein said light emitting diode emits visible light of a single color falling within a range from blue color to red color.

7. A strain inspection apparatus (100) according to claim 5, wherein said light emitting diode (LED) is a surface-mount type.

8. A strain inspection system (220) that is formed with the strain inspection apparatus (100) according to any one of preceding claims 1 to 7 and an analysis device (221) capable of communicating with the strain inspection apparatus through a communication means (222), said analysis device (221) **characterized by** including:
an input section (245) that receives an instruction input by an operator;
an arithmetic section (243) that computes, based on the input instruction, measured data transmitted from said strain inspection apparatus;
an image generation section (247) that generates an image based on a value computed by said arithmetic section (243); and
a display section (246) that displays the image generated by the image generation section (247).

9. A strain inspection system (220) according to claim 8, wherein said arithmetic section (243) includes a gradation value calculation part (262) that calculates, based on the measured data, a gradation value indicating a magnitude of strain.

10. A strain inspection system (220) according to claim 9, wherein said image generation section (247) generates a three-dimensional image based on a value computed by the gradation value calculation part (260).

11. A strain inspection system (220) according to claim 8, wherein said arithmetic section (243) includes an axis direction calculation part (261) that computes, based on the measured data, an axis direction value indicating an axis direction of strain.

12. A strain inspection system (220) according to claim 8, wherein said arithmetic section (243) includes a measured data extraction part (262) that extracts an arbitrary range in the measured data.

13. A strain inspection system (220) according to claim 8 or 12, wherein said arithmetic section (243) includes a linear calculation part (263) that calculates a magnitude of strain or an axis direction on an arbitrary straight line in the measured data or measured data extracted by the measured data extraction part (262).
